# EUROPÄISCHE PATENTSCHRIFT

(11) **EP 1 598 919 B1**
(45) Veröffentlichungstag und Bekanntmachung des Hinweises auf die Patenterteilung: **06.06.2007**
(21) Anmeldenummer: 04010238.6
(22) Anmeldetag: 29.04.2004
(51) Int. Cl.: H02K 1/17, H02K 5/24

(54) **Vorrichtung zur geräuschgedämmten Halterung eines Elektromotors, insbesondere eines Lüftermotors**
Noise dampening device for retaining an electric motor, for example a blower motor
Support amortisseur de bruit d'un moteur électrique, par exemple un moteur pour un ventilateur

(43) Veröffentlichungstag der Anmeldung: 23.11.2005
(73) Patentinhaber: SIEMENS AKTIENGESELLSCHAFT, 80333 München (DE)
(72) Erfinder: Drexlmaier, Thomas, 97072 Würzburg (DE)

(56) Entgegenhaltungen:
- EP-A- 0 197 760
- EP-A- 0 848 477
- DE-A- 1 613 368
- DE-A- 19 517 668
- US-A- 3 789 250
- US-A- 6 060 799

## Beschreibung

Die Erfindung bezieht sich auf einen Elektromotor, insbesondere Lüftermotor, mit Halterungsvorrichtung zum geräuschgedämmten Einbau in ein radial äußeres Motorhalterungsteil.

Durch die EP 0 848 477 B1 ist eine geräuschgedämmte Halterung eines Elektromotors mit auf dessen Rotorwelle befestigtem Lüfterrad in einem radial äußeren Motorhalterungsteil bekannt; dazu ist der Elektromotor mit seinem Motorgehäuse bzw. Rückschlussteil axial mit einem radial äußeren hülsenförmigen Adapterteil zusammensteckbar und gegenseitig in der Betriebsendlage verrastbar, das an seinem Außenumfang geräuschdämmende, radial vorstehende Halterungsnasen aufweist, die beim Einbau in eine äußere Motorhalterung gegen diese verklemmbar sind.

Durch die EP 1 108 150 B1 ist ein ähnlicher Elektromotor bekannt, bei dem an ein dessen Motorgehäuse radial außen umfassendes Adapterteil mit radial vorstehenden Halterungsnasen an dem einen stirnseitigen Ende ein Lagerbügel mit einer Lageraufnahme einstückig angeformt ist.

Durch die US 3,789,250 A bzw. DE 23 02 947 A1 ist eine Dynamomaschine, insbesondere für motorgetriebene Kleinaggregate von Kraftfahrzeugen, mit einem topfförmigen Kunststoffgehäuse mit als erstes Lagerschild ausgebildetem Topfboden und an seinem offenen Gehäuseende befestigbarem zweiten Lagerschild sowie angeformtem, im wesentlichen radial abstehenden Befestigungsflansch bekannt; Dauermagnete sind tangential stirnseitig als auch rotorseitig und in ihrer einen axialen Richtung durch Anlage an dem topfförmigen Kunststoffgehäuse sowie nach radial außen und in der anderen axialen Richtung durch außen aufliegende, radial mit dem topfförmigen Kunststoffgehäuse zu verschraubende Polschuhe fixierbar.

Die DE 195 17 668 A1, der nächstliegende Stand der Technik, offenbart einen Elektromotor, insbesondere Lüftermotor
- mit durch axiale Aufbaumontage zwischen je einem axial stirnseitigen Lagerschild positionierbarem Motorgehäuse als Stator-Rückschlussteil für statorseitige Erregermagnete
- mit einem das Motorgehäuse untergreifenden Adapter-Halterungsteil zur Halterung der Erregermagnete
- mit einer Anformung des einen stirnseitigen Lagerschildes am entsprechenden einen axialen Ende des Adapter-Halterungsteils;
- mit einer gegenseitigen Positions-Fixierung zwischen dem Motorgehäuse, dem Adapter-Halterungsteil einerseits und dem anderen, als gesondertem Bauteil montierbaren stirnseitigen Lagerschild andererseits durch axiales Verspannen des Motorgehäuses mit dem anderen Lagerschild am anderen axialen Ende des Adapter-Halterungsteils.

Durch die DE 16 13 368 A1 ist ein dauermagneterregter Kleinstmotor mit einem bügelförmigen Kunststoffrahmen mit in seinem Bügelfuß integriertem ersten Lagerschild und an seinen freien Bügelenden befestigtem zweiten Lagerschild sowie mit axial verlaufenden Haltestegen zur Aufnahme von dauermagnetischen Segmentschalen und mit konzentrisch zur Motorwellenrichtung ringförmigen Schlitzen zum Einlegen von ringszylindrischen Rückschlussblechen bekannt.

Durch die US 6,060,799 A ist ein dauermagneterregter Motor mit einem topfförmigen, in seinem Topfboden ein Wellenlager aufnehmenden Kunststoff-Magnetträger bekannt, der als mit Magnetschalen vorbestückbare Baueinheit axial in ein Rückschluss-Motorgehäuse einsteckbar ist.

Gemäß Aufgabe vorliegender Erfindung soll bei einem als Massenserienprodukt hergestellten kompakten Elektromotor in fertigungs- und montagetechnisch aufwandsarmer Weise eine wirksame Geräuschminderung bei gleichzeitig stabilem Motoraufbau erreicht werden.

Die Lösung dieser Aufgabe gelingt durch eine Vorrichtung zur geräuscharmen Halterung eines Elektromotors gemäß Patentanspruch 1; vorteilhafte Ausgestaltungen dieser Vorrichtung sind jeweils Gegenstand der Unteransprüche.

Durch das Verspannen des als Rückschlussteil wirkenden Motorgehäuses mit dem anderen Lagerschild sind das die Magnete aufnehmende Adapter-Halterungsteil sowie das der gedämpften Halterung dienende Adapter-Zwischenteil nach dem axialen Auf- bzw. Einstecken des Motorgehäuses durch dessen axialen Andruck im gegenseitigen festen Verbund auf einfache und sichere Weise positionierbar und mit befestigbar.

Der Montageaufwand lässt sich dadurch weiter mindern, dass das Adapter-Halterungsteil und das Adapter-Zwischenteil mit einem im Bereich des anderen axialen Endes des Adapter-Halterungsteiles verbindenden Übergangsteil einstückig ausgebildet sind und diese Baueinheit beim Montageverbund mit dem Motorgehäuse bei dessen Verspannung mit dem anderen Lagerschild mitpositionierbar ist.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1,3,5: in jeweils perspektivischer Explosionsdarstellung drei hinsichtlich der Ausführung und Fixierung von Adapter-Zwischenteil und Adapter-Halterungsteil unterschiedliche erfindungsgemäße Vorrichtungen;
- FIG 2,4,6: in einem Axialschnitt die erfindungsgemäßen Vorrichtungen gemäß FIG 1,3,5.

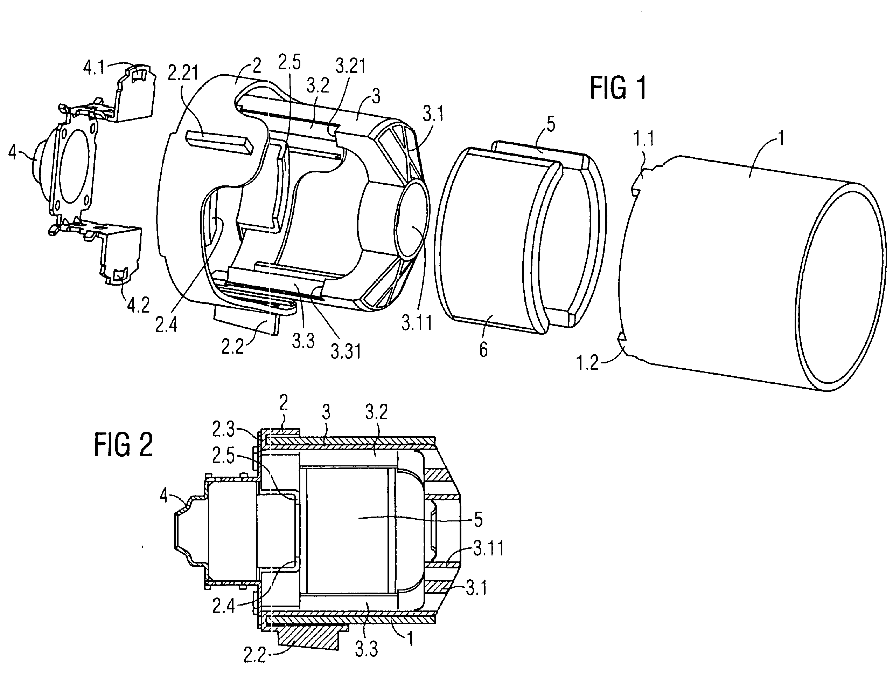

Die Figuren 1,2 bzw. 3,4 bzw. 5,6 zeigen jeweils eine Vorrichtung zur geräuschgedämmten Halterung eines hinsichtlich seines Statorteils dargestellten dauermagneterregten Elektromotors ausgehend von einer z.B. aus der eingangs genannten EP 0 848 477 B1 bekannten Art; derartige Elektromotoren finden insbesondere bei Lüftergebläsen in Kraftfahrzeugen Anwendung und sind in einem Lüftergehäuse geräuschgedämmt gehaltert.

Ein Adapter-Zwischenteil 2 übergreift radial ein Stator-Rückschlussteil in Form eines Motorgehäuses 1, und weist in bekannter Weise, über seinen äußeren Umfang verteilt, radial abstehende zungenartige geräuschdämmende Halterungs-Stege 2.1;2.2 auf, die bei Einbau des Elektromotors in eine Motorhalterung, z.B. einem Lüftergehäuse, gegen diese - wie z.B. aus der eingangs genannten EP 0 848 477 B1 bekannt - angedrückt werden.

Das Adapter-Halterungsteil 3 weist bei Reduzierung auf einen minimalen Materialeinsatz an seinem einen Ende ein einstückig angeformtes erstes Lagerschild 3.1, gegebenenfalls mit integrierter Lageraufnahme 3.11, auf und erstreckt sich - im Endmontagezustand des Elektromotors - radial innerhalb des Motorgehäuses 1, weist Aufnahmen 3.2;3.3 für mit ihren tangentialen Stirnseiten anliegende, axial einsteckbare Erregermagnete in Form von Magnetschalen 5,6 auf und reicht mit seinem anderen Ende axial soweit zu dem anderen Lagerschild 4, dass es mit diesem - wie im folgenden anhand der verschiedenen Ausgestaltungen beschrieben - vorteilhaft zusammen mit dem Adapter-Zwischenteil 2 verspannbar ist.

Das in axialer Aufbaumontage mit radialem Übergriff über das Adapter-Halterungsteil 3 und mit radialem Untergriff unter das Adapter-Zwischenteil 2 steckbare Motorgehäuse 1 ist an seiner der dem anderen Lagerschild 4 zugewandten Stirnseite mit, vorzugsweise angestanzten, Klemmzungen 1.1;1.2 versehen mittels derer es mit dem anderen Lagerschild 4, vorzugsweise mittels an dieses angeformter Klemmzungen-Aufnahmen 4.1;4.2, zu einem festen Verbund verspannbar ist.

In vorteilhafter Weise sind die wesentlichen Bauteile in Form des die Magnetschalen 5,6 vormontierbar aufnehmenden und mit dem einen Lagerschild 3.1 integrierten Adapter-Halterungsteils 3 sowie des mit den geräuschdämmenden Halterungsstegen 2.1;2.2 versehenen Adapter-Zwischenteils 2 gleichzeitig mit dem Motorgehäuse 1 gegenüber dem anderen Lagerschild - wie im folgenden näher beschrieben- verspannbar.

In einer ersten Ausgestaltung gemäß FIG 1,2 sind das Adapter-Zwischenteil 2 und das Adapter-Halterungsteil 3 durch einen stirnseitigen Übergangsteil 2.3 im Bereich des diskreten anderen Lagerschildes 4 derart zu einer besonders einfach zu montierenden Baueinheit zusammengefasst, dass das zwischen Adapter-Zwischenteil 2 und Adapter-Halterungsteil 3 steckbare Motorgehäuse 1 bei seiner Verspannung mit dem anderen Lagerschild 4 durch stirnseitigen Andruck an den Übergangsteil 2.3 das Adapter-Zwischenteil 2 und das Adapter-Halterungsteil 3 in ihrer jeweiligen Endbaulage mitfixiert.

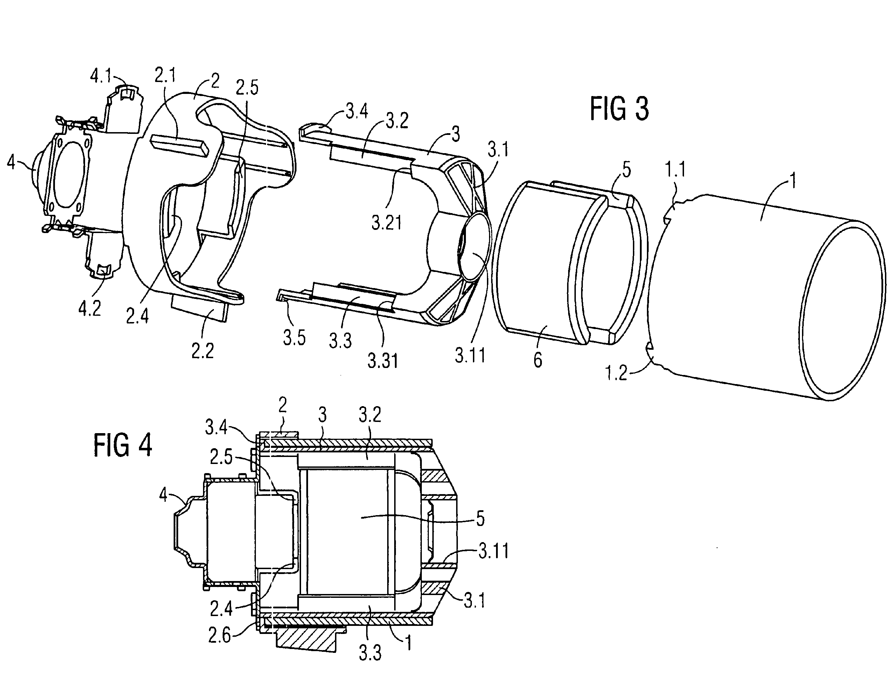

In einer zweiten Ausgestaltung gemäß FIG 3,4 weist sowohl das zu dem Adapter-Halterungsteil 3 diskrete Adapter-Zwischenteil 2 radiale Anschläge 2.6 als auch das Adapter-Halterungsteil 3 radiale Anschläge 3.4;3.5 derart auf, dass diese - ähnlich wie in der ersten Ausgestaltung bezüglich des Übergangsteils 2.3 - durch Andruck des Motorgehäuses 1 gegenüber dem anderen Lagerschild 4 mitverspannbar sind; durch die als diskrete Bauteile ausführbaren und trotzdem einfach positionierbaren Adapterteile lässt sich mit wenigen Mitteln eine hohe Baugrößen-Variabilität erreichen.

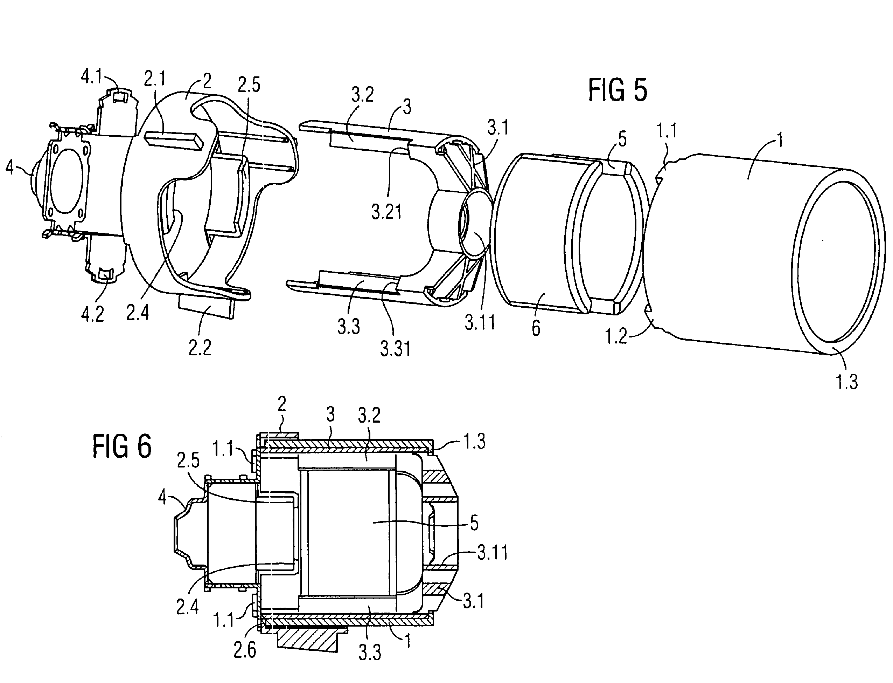

In einer dritten Ausgestaltung gemäß FIG 5,6 sind bei sonst weitgehender Äquivalenz an dem Motorgehäuse 1 Anschläge 1.3, z.B. in Form eines umlaufenden radial vorstehenden Kragens, vorgesehen, über die das Adapter-Halterungsteil 3 vom einen Ende her gegen das diskrete Lagerschild 4 andrückbar und somit wiederum gleichzeitig mit der Verspannung des Motorgehäuses 1 an dem zweiten Lagerschild 4 betriebsmäßig positionierbar und fixierbar ist.

Bei der axialen Aufbaumontage ist aufgrund der erfindungsgemäßen Vorrichtung mit wenigen Bauteilen und wenigen sowie einfachen Fertigungsschritten ein geräuschgedämpft in einer Motorhalterung aufnehmbarer permanenterregter Elektromotor dadurch möglich, dass die Magnetschalen 5;6 mit Anlage ihrer tangentialen Stirnkanten an den Aufnahmen 3.2;3.3 des Adapter-Halterungsteils 3 axial bis zur stirnseitigen Anlage an den axialen Anschlägen 3.21;3.31 des Adapter-Zwischenteil 3 eingesteckt werden und das Adapter-Halterungsteil 3 sowie das Adapter-Zwischenteil 2 nach dem axialen Auf- bzw. Einstecken des Motorgehäuses 1 durch dessen axialen Andruck mitbefestigt werden, wenn das Motorgehäuse 1 mittels von nach einer Ausgestaltung der Erfindung an diesem angeformten Klemmzungen 1.1 und korrespondierenden Klemmzungen-Aufnahmen 4.1;4.2 an dem anderen, gesonderten Lagerschild 4 festgespannt wird; die axiale Lagesicherung der Magnetschalen 5;6 gegenüber dem anderen Ende des Elektromotors erfolgt dabei in besonders einfacher Weise durch die axialen Anschläge 2.4;2.5 des Adapter-Zwischenteils 2.

## Patentansprüche

1. Elektromotor, insbesondere Lüftermotor, mit Halterungsvorrichtung zum geräuschgedämmten Einbau in ein radial äußeres Motor-Halterungsteil
- mit durch axiale Aufbaumontage zwischen je einem axial stirnseitigen Lagerschild (3.1 bzw. 4) positionierbarem Motorgehäuse (1) als Stator-Rückschlussteil für statorseitige Erregermagnete (5;6),
- mit einem das Motorgehäuse (1) zumindest teilweise radial außen übergreifenden geräuschdämmenden Adapter-Zwischenteil (2) zur geräuschdämmenden Aufnahme des Elektromotors in dem radial äußeren Motor-Halterungsteil;
- mit einem das Motorgehäuse (1) untergreifenden Adapter-Halterungsteil (3) zur Halterung der Erregermagnete (5;6);
- mit einer Anformung des einen stirnseitigen Lagerschildes (3.1) am entsprechenden einen axialen Ende des Adapter-Halterungsteils (3);
- mit einer gegenseitigen Positions-Fixierung zwischen dem Motorgehäuse (1), dem Adapter-Halterungsteil (3) sowie dem Adapter-Zwischenteil (2) einerseits und dem anderen, als gesondertem Bauteil montierbaren stirnseitigen Lagerschild (4) andererseits durch axiales Verspannen des Motorgehäuses (1) mit dem anderen Lagerschild (4) am anderen axialen Ende des Adapter-Halterungsteils (3).

2. Elektromotor mit Halterungsvorrichtung nach Anspruch 1
- mit einer Anordnung des das Motorgehäuse (1) übergreifenden geräuschdämmenden Adapter-Zwischenteils (2) im Bereich des anderen axialen Endes des Adapter-Halterungsteils (3).

3. Elektromotor mit Halterungsvorrichtung nach Anspruch 1 und/oder 2
- mit einer Ausbildung des Adapter-Zwischenteils (2) bzw. des Adapter-Halterungsteils (3) als diskrete Bauteile.

4. Elektromotor mit Halterungsvorrichtung nach Anspruch 1 und/oder 2
- mit einer Ausbildung des Adapter-Zwischenteils (2) und des Adapter-Halterungsteils (3) als einstückige, im Sinne einer axialen Aufbaumontage montierbare, Baueinheit.

5. Elektromotor mit Halterungsvorrichtung nach Anspruch 4
- mit einem einstückigen Übergang (2.3) von dem Adapter-Halterungsteil (3) in den Adapter-Zwischenteil (2) im Bereich des anderen Endes des Adapter-Halterungsteils (3).

6. Elektromotor mit Halterungsvorrichtung nach Anspruch 5
- mit einer axialen Verspannung des einstückigen Überganges (2.3) zwischen dem Adapter-Halterungsteil (3) und dem Adapter-Zwischenteil (2) durch die Positions-Fixierung zwischen dem Motorgehäuse (1) und dem anderen Lagerschild (4).

7. Elektromotor mit Halterungsvorrichtung nach Anspruch 1 und/oder 2
- mit radial vorstehenden Verspann-Anschlägen (3.4,3.5) an dem anderen Ende des Adapter-Halterungsteils (3);
- mit radial vorstehenden Verspann-Anschlägen (2.6) an dem im Bereich des anderen axialen Endes des Adapter-Halterungsteils (3) befindlichen anderen Ende des Adapter-Zwischenteils (2).

8. Elektromotor mit Halterungsvorrichtung nach Anspruch 1 und/oder 2
- mit radial vorstehenden Verspann-Anschlägen (1.3), insbesondere in Form eines umlaufenden, radial vorstehenden Randes, an dem einen Ende des Motorgehäuses (1);
- mit radial vorstehenden Anschlägen (2.6) an dem im Bereich des anderen axialen Endes des Adapter-Halterungsteils (3) befindlichen anderen axialen Ende des Adapter-Zwischenteils (2).

9. Elektromotor mit Halterungsvorrichtung nach Anspruch 7 oder 8
- mit der jeweiligen axialen Verspannung des Adapter-Zwischenteils (2) bzw. des Adapter-Halterungsteils (3) durch die Positions-Fixierung zwischen dem Motorgehäuse (1) und dem anderen Lagerschild (4) über die radial vorstehenden Anschläge (2.6;3.4,3.5 bzw. 1.3;2.6).

10. Elektromotor mit Halterungsvorrichtung nach zumindest einem der Ansprüche 1 bis 9
- mit einer Anlage der Erregermagnete in Form von Magnetschalen (5,6) mit ihren tangentialen Stirnkanten an Aufnahmen (3.2;3.3) des Adapter-Halterungsteils (3) bzw. mit ihren axialen Stirnseiten an axialen Anschlägen (3.21;3.31) des Adapter-Halterungsteils (3) bzw. an axialen Anschlägen (2.4;2.5) des Adapter-Zwischenteils (2).

11. Elektromotor mit Halterungsvorrichtung nach Anspruch 10
- mit einer axialen Verspannung der Magnetschalen (5,6) durch die Positions-Fixierung zwischen dem Motorgehäuse (1) und dem anderen Lagerschild (4).

12. Elektromotor mit Halterungsvorrichtung nach zumindest einem der Ansprüche 1 bis 11
- mit einer Ausbildung des Adapter-Halterungsteils (3) und/oder des Adapter-Zwischenteils (2) als Kunststoffteil, insbesondere als Kunststoff-Spritzgussteil.

## Claims

1. Electric motor, in particular fan motor, with mounting device for noise-dampened installation into a radial external motor mounting part
- with motor housing (1) that can be positioned by means of axial installation assembly between an axial front-side bearing bracket (3.1 or 4) in each case as a stator reflux part for stator-side energising magnets (5;6),
- with a noise-dampened intermediate adapter part (2) externally overlapping the motor housing (1) radially at least partially for the noise-dampened accommodation of the electric motor in the radial external motor mounting part,
- with an adapter fixture (3) engaging under the motor housing (1) for holding the energising magnets (5;6),
- with the one bearing bracket (3.1) on the front side being moulded on the corresponding one axial end of the adapter fixture (3),
- with a two-way position anchor between the motor housing (1), the adapter fixture (3) as well as the intermediate adapter part (2) on the one hand and the other bearing bracket (4) that can be mounted on the front side as a separate component on the other hand, by axially bracing the motor housing (1) with the other bearing bracket (4) on the other axial end of the intermediate adapter part (2).

2. Electric motor with mounting device according to claim 1
- with a configuration of the noise-dampened intermediate adapter part (2) overlapping the motor housing (1) in the area of the other axial end of the adapter fixture (3).

3. Electric motor with mounting device according to claim 1 and/or 2
- with the intermediate adapter part (2) and the adapter fixture (3) respectively being designed as discrete components.

4. Electric motor with mounting device according to claim 1 and/or 2
- with the intermediate adapter part (2) and the adapter fixture (3) being designed as a one-piece component able to be mounted in the sense of an axial installation assembly.

5. Electric motor with mounting device according to claim 4
- with a one-piece transition (2.3) from the adapter fixture (3) into the intermediate adapter part (2) in the area of the other end of the adapter fixture (3).

6. Electric motor with mounting device according to claim 5
- with the one-piece transition (2.3) between the adapter fixture (3) and the intermediate adapter part (2) being braced by fixing the position between the motor housing (1) and the other bearing bracket (4).

7. Electric motor with mounting device according to claim 1 and/or 2
- with radially protruding limit stops (3.4,3.5) at the other end of the intermediate adapter part (3);
- with radially protruding limit stops (2.6) at the other end of the adapter fixture (2) located in the area of the other axial end of the adapter fixture (3).

8. Electric motor with mounting device according to claim 1 and/or 2
- with radially protruding limit stops (1.3), in particular in the form of a circumferential, radially protruding edge, at the one end of the motor housing (1),
- with radially protruding limit stops (2.6) at the other axial end of the intermediate adapter part (2) located in the area of the other axial end of the adapter fixture (3).

9. Electric motor with mounting device according to claim 7 or 8
- with the intermediate adapter part (2) or the adapter fixture (3) respectively being axially braced by fixing the position between the motor housing (1) and the other bearing bracket (4) via the radially protruding limit stops (2.6;3.4,3.5 or 1.3;2.6).

10. Electric motor with mounting device according to at least one of the claims 1 through 9
- with the tangential front edges of the energising magnets in the form of magnet shells (5,6) abutting retainers (3.2;3.3) of the adapter fixture (3) or with their axial front sides abutting axial limit stops (3.21;3.31) of the adapter fixture (3) or axial limit stops (2.4;2.5) of the intermediate adapter part (2).

11. Electric motor with mounting device according to claim 10 with the magnet shells (5,6) being axially braced by fixing the position between the motor housing (1) and the other bearing bracket (4).

12. Electric motor with mounting device according to at least one of the claims 1 through 11
- with the adapter fixture (3) and/or the intermediate adapter part (2) being designed as a plastic part, in particular as a plastic injection moulding part.

## Revendications

1. Moteur électrique, en particulier moteur de ventilateur, avec dispositif de fixation pour un montage amortissant le bruit dans une pièce de montage de moteur, disposée radialement à l'extérieur,
- comportant un carter de moteur (1) pouvant être positionné pour un montage axial entre chaque fois une plaque de base (3.1 ou 4) disposée axialement sur la face frontale, comme pièce de retenue du stator pour des aimants d'excitation (5; 6) situés du coté stator,
- comportant une pièce intermédiaire d'adaptation (2) amortissant le bruit, recouvrant par dessus, au moins en partie, radialement à l'extérieur le carter de moteur (1) pour recevoir, en amortissant le bruit, le moteur électrique dans la pièce extérieure radialement de fixation du moteur,
- comportant une pièce de fixation (3) de l'adaptateur recouvrant par dessous le carter de moteur (1) pour la fixation des aimants d'excitation (5; 6),
- comportant un ajustement de l'un des flasques, (3.1), côté frontal, sur une extrémité axiale correspondante de la pièce de fixation (3) de l'adaptateur,
- comportant une fixation de positionnement du côté opposé entre le carter de moteur (1), la pièce de fixation (3) de l'adaptateur, ainsi que la pièce intermédiaire d'adaptation (2), d'un côté, et l'autre flasque (4), côté frontal, pouvant être monté comme pièce spéciale, de l'autre côté, par une mise en serrage axial du carter de moteur (1) avec l'autre flasque (4) sur l'autre extrémité axiale de la pièce de fixation (3) de l'adaptateur.

2. Moteur électrique avec dispositif de fixation suivant la revendication 1,
- comportant une disposition de la pièce intermédiaire d'adaptation (2) amortissant le bruit recouvrant par-dessus le carter du moteur (1) dans la zone de l'autre extrémité axiale de la pièce de fixation (3) de l'adaptateur.

3. Moteur électrique avec dispositif de fixation suivant la revendication 1 ou 2,
- comportant une réalisation de la pièce intermédiaire d'adaptation (2) ou de la pièce de fixation (3) de l'adaptateur comme pièce de construction distincte.

4. Moteur électrique avec dispositif de fixation suivant la revendication 1 et/ou 2,
- comportant une réalisation de la pièce intermédiaire d'adaptation (2) et de la pièce de fixation (3) de l'adaptateur sous la forme d'une unité de construction formant une pièce unique, pouvant être montée en vue d'un assemblage axial.

5. Moteur électrique comportant un dispositif de fixation suivant la revendication 4,
- comportant une pièce de jonction (2.3) en une seule pièce, allant, de la pièce de fixation (3) de l'adaptateur, dans la pièce intermédiaire d'adaptation (2), dans la zone de l'autre extrémité de la pièce de fixation (3) de l'adaptateur.

6. Moteur électrique comportant un dispositif de fixation suivant la revendication 5,
- avec une mise en serrage axial de la pièce de jonction (2.3) en une seule pièce entre la pièce de fixation (3) de l'adaptateur et la pièce intermédiaire d'adaptation (2), au moyen de la fixation de positionnement entre le carter de moteur (1) et l'autre flasque (4).

7. Moteur électrique comportant un dispositif de fixation suivant la revendication 1 et/ou 2,
- comportant des butées en saillie radiale (3.4, 3.5), de mise en serrage sur l'autre extrémité de la pièce de fixation (3) de l'adaptateur,
- comportant des butées en saillie radiale (2.6) de mise en serrage sur l'autre extrémité de la pièce intermédiaire d'adaptation (2), située dans la zone de l'autre extrémité axiale de la pièce de fixation (3) de l'adaptateur.

8. Moteur électrique comportant un dispositif de fixation suivant la revendication 1 et/ou 2,
- comportant des butées de mise en serrage, en saillie, (1.3), en particulier sous la forme d'une bordure circulaire, en saillie radiale, contre l'une des extrémités du carter de moteur (1),
- comportant des butées de mise en serrage, en saillie radiale, (2.6), sur l'autre extrémité axiale de la pièce intermédiaire d'adaptation (2) située dans la zone de l'autre extrémité axiale de la pièce de fixation (3) de l'adaptateur.

9. Moteur électrique comportant un dispositif de fixation suivant la revendication 7 ou 8,
- comportant chaque fois une mise en serrage axial de la pièce intermédiaire d'adaptation (2) ou de la pièce de fixation (3) de l'adaptateur au moyen de la fixation de positionnement entre le carter de moteur (1) et l'autre flasque (4), par l'intermédiaire des butées en saillie radiale (2.6; 3.4, 3.5 ou 1.3; 2.6).

10. Moteur électrique comportant un dispositif de fixation suivant au moins l'une des revendications 1 à 9,
- comportant une adaptation des aimants d'excitation sous la forme de coquilles d'aimants (5; 6) avec leurs arêtes frontales tangentielles sur des réceptacles (3.2; 3.3) de la pièce de fixation (3) de l'adaptateur ou avec leurs faces frontales axiales sur des butées axiales (3.21; 3.31) de la pièce de fixation (3) de l'adaptateur ou sur des butées axiales (2.4; 2.5) de la pièce intermédiaire d'adaptation (2).

11. Moteur électrique comportant un dispositif de fixation suivant la revendications 10,
- comportant une mise en serrage axial des coquilles d'aimants (5; 6) au moyen de la fixation de positionnement entre le carter de moteur (1) et l'autre flasque (4).

12. Moteur électrique comportant un dispositif de fixation suivant au moins l'une des revendications 1 à 11,
- avec une conception de la pièce de fixation (3) de l'adaptateur et/ou de la pièce intermédiaire d'adaptation (2) sous la forme d'une pièce en matière plastique, en particulier d'une pièce injectée en matière plastique.
